# EUROPEAN PATENT APPLICATION

(11) **EP 3 214 559 A1**
(43) Date of publication of application: **06.09.2017**
(21) Application number: 15862360.3
(22) Date of filing: 07.05.2015
(51) Int. Cl.: G06F 17/30

(54) **DATA GRAPHING METHOD, DEVICE AND DATABASE SERVER**

(30) Priority: 28.11.2014 CN 201410711878
(71) Applicant: Huawei Technologies Co., Ltd., Longgang District Shenzhen, Guangdong 518129 (CN)
(72) Inventor: BHATTACHARYA, Anirban, Shenzhen Guangdong 518129 (CN); THIYAGARAJAH, Janakiraman, Shenzhen Guangdong 518129 (CN); HU, Bo, Shenzhen Guangdong 518129 (CN)
(74) Representative: Körber, Martin Hans
(86) International application number: PCT/CN2015/078443
(87) International publication number: WO 2016/082468

(57) **Abstract**

Embodiments of the present invention provide a data visualization method and apparatus, and a database server. The method includes: receiving, by a database server, a data query request sent by a request side, where the data query request includes a query condition and a data graph type; acquiring data according to the query condition, where the data graph type is used for presentation of the data; and generating a data graph according to the data and the data graph type. In the embodiments of the present invention, a query condition and a data graph type are carried in a data query request, and a data graph is generated inside a database server. Therefore, it is unnecessary to develop software for multiple times in different architectures to generate a data graph, which improves resource utilization, and has a relatively low requirement on skills of an operator. In addition, a development process of an application involving graphics and reports is simplified, and development efficiency of the foregoing application is improved.

## Description

### TECHNICAL FIELD

Embodiments of the present invention relate to database technologies, and in particular, to a data visualization method and apparatus, and a database server.

### BACKGROUND

In fields of services such as a big data analytics service, a report generation service, and a state monitoring service, data needs to be graphically presented. A graph is a form that implements data visualization for most systems, and is usually expressed as a bar chart, a pie chart, a stacked chart, and the like.

Currently in the industry, data visualization is mainly implemented in the following manners: acquiring original data by using a database processing language; processing the original data by using a service programming language; and generating a data graph by using a service language.

For example, for an application in a browser/server (English: Browser/Server, B/S for short) architecture, a common implementation manner is: acquiring original data by using the structured query language (English: Structured Query Language, SQL for short); preprocessing the original data by using Java code; and generating a data graph by using a scripting language, that is, Javascript code. For a same set of data, or different sets of data having similar structures, in a client/server (English: Client/Server, C/S for short) architecture, the implementation manner may become: acquiring original data by using the SQL language; preprocessing the original data by using C++ code; and generating a data graph by using Java code.

Therefore, for different architectures, different software needs to be developed to generate a data graph, and therefore, it causes a waste of resources in terms of software production.

### SUMMARY

Embodiments of the present invention provide a data visualization method and apparatus, and a database server, to avoid a waste of resources caused by data visualization in the prior art.

According to a first aspect, an embodiment of the present invention provides a data visualization method, including:
receiving, by a database server, a data query request sent by a request side, where the data query request includes a query condition and a data graph type;
acquiring, by the database server, data according to the query condition, where the data graph type is used for presentation of the data; and
generating, by the database server, a data graph according to the data and the data graph type.

With reference to the first aspect, in a first possible implementation manner of the first aspect, the generating, by the database server, a data graph according to the data and the data graph type includes:
determining whether a template corresponding to the data graph type has been loaded into the database server; and
if it is determined that the template corresponding to the data graph type has been loaded into the database server, applying the data to the template, to generate the data graph; otherwise, loading the template into the database server and applying the data to the template, to generate the data graph.

With reference to the first possible implementation manner of the first aspect, in a second possible implementation manner of the first aspect, the determining whether a template corresponding to the data graph type has been loaded into the database server includes:
searching one or more data graph templates stored by the database server, to determine whether the template corresponding to the data graph type exists, and if the template corresponding to the data graph type exists, determining that the template corresponding to the data graph type has been loaded into the database server; or if the template corresponding to the data graph type does not exist, determining that the template corresponding to the data graph type has not been loaded into the database server.

With reference to any one of the first aspect and the first to second possible implementation manners of the first aspect, in a third possible implementation manner of the first aspect, if the data graph type is a customized template, the data query request further includes: information indicating a location from which the customized template can be acquired.

With reference to any one of the first aspect and the first to third possible implementation manners of the first aspect, in a fourth possible implementation manner of the first aspect, the generating, by the database server, a data graph according to the data and the data graph type specifically includes:
generating the data graph according to the data and the data graph type, and generating a uniform resource locator URL that points to the data graph; and
after the generating, by the database server, the URL, the method further includes:
   sending, by the database server, the URL as a response to the request side, so that the request side accesses the data graph by using the URL.

According to a second aspect, an embodiment of the present invention provides a data visualization apparatus, including:
a receiving module, configured to receive a data query request sent by a request side, where the data query request includes a query condition and a data graph type;
an acquiring module, configured to acquire data according to the query condition obtained by the receiving module, where the data graph type is used for presentation of the data; and
a processing module, configured to generate a data graph according to the data obtained by the acquiring module and the data graph type obtained by the receiving module.

With reference to the second aspect, in a first possible implementation manner of the second aspect, the processing module includes:
a determining unit, configured to determine whether a template corresponding to the data graph type has been loaded into the data visualization apparatus; and
if the determining unit determines that the template corresponding to the data graph type has been loaded into the data visualization apparatus, trigger a processing unit to apply the data to the template, to generate the data graph; otherwise, trigger the processing unit to load the template into the data visualization apparatus and apply the data to the template, to generate the data graph.

With reference to the first possible implementation manner of the second aspect, in a second possible implementation manner of the second aspect, the determining unit is specifically configured to:
search one or more data graph templates stored by the data visualization apparatus, to determine whether the template corresponding to the data graph type exists, and if the template corresponding to the data graph type exists, determine that the template corresponding to the data graph type has been loaded into the data visualization apparatus; or if the template corresponding to the data graph type does not exist, determine that the template corresponding to the data graph type has not been loaded into the data visualization apparatus.

With reference to any one of the second aspect and the first to second possible implementation manners of the second aspect, in a third possible implementation manner of the second aspect, if the data graph type is a customized template, the data query request further includes: information indicating a location from which the customized template can be acquired.

With reference to any one of the second aspect and the first to the third possible implementation manners of the second aspect, in a fourth possible implementation manner of the second aspect, the apparatus further includes a response module, where
the processing module is further configured to generate a uniform resource locator URL that points to the data graph; and
the response module is configured to send the URL as a response to the request side, so that the request side accesses the data graph by using the URL.

According to a third aspect, an embodiment of the present invention provides a database server, including: a receiver, a data processing statement parser, a data processing command dispatcher, a data processing command executor, a data storage, and a graph engine, where
the receiver is configured to receive a data query request, where the data query request includes a query condition and a data graph type;
the data processing statement parser is configured to parse the data query request to obtain a data processing command and a graph generation command, where the data processing command includes the query condition, and the graph generation command includes the data graph type;
the data processing command dispatcher is configured to dispatch the data processing command executor to acquire, according to the data processing command, data from the data storage; and
the graph engine is configured to generate a data graph according to the graph generation command and the data.

With reference to the third aspect, in a first possible implementation manner of the third aspect, the graph engine is specifically configured to:
determine whether a template corresponding to the data graph type has been loaded into the database server; and
if it is determined that the template corresponding to the data graph type has been loaded into the database server, apply the data to the template, to generate the data graph; otherwise, load the template into the database server and apply the data to the template, to generate the data graph.

With reference to the first possible implementation manner of the third aspect, in a second possible implementation manner of the third aspect, the determining, by the graph engine, whether a template corresponding to the data graph type has been loaded into the database server is specifically:
searching one or more data graph templates stored by the database server, to determine whether the template corresponding to the data graph type exists, and if the template corresponding to the data graph type exists, determining that the template corresponding to the data graph type has been loaded into the database server; or if the template corresponding to the data graph type does not exist, determining that the template corresponding to the data graph type has not been loaded into the database server.

With reference to any one of the third aspect and the first to second possible implementation manners of the third aspect, in a third possible implementation manner of the third aspect, the data processing command dispatcher is further configured to:
initialize the graph engine before the data fed back by the data processing command executor and the graph generation command are sent to the graph engine.

With reference to any one of the third aspect and the first to third possible implementation manners of the third aspect, in a fourth possible implementation manner of the third aspect, if the data graph type is a customized template, the data query request further includes: information indicating a location from which the customized template can be acquired.

With reference to any one of the third aspect and the first to fourth possible implementation manners of the third aspect, in a fifth possible implementation manner of the third aspect, the graph engine is further configured to:
generate a uniform resource locator URL that points to the data graph; and
send the URL as a response to a request side, so that the request side accesses the data graph by using the URL.

In the embodiments of the present invention, a query condition and a data graph type are carried in a data query request, and a data graph can be generated inside a database server. Therefore, it is unnecessary to develop software for multiple times in different architectures to generate a data graph, which improves resource utilization, and has a relatively low requirement on skills of an operator. In addition, a development process of an application involving graphics and reports is simplified, and development efficiency of the foregoing application is improved.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of Embodiment 1 of a data visualization method according to the present invention;
FIG. 2 is a schematic structural diagram of Embodiment 1 of a data visualization apparatus according to the present invention;
FIG. 3 is a schematic structural diagram of Embodiment 1 of a database server according to the present invention;
FIG. 4 is an exemplary diagram of a comparison between functions of a database server of the present invention and functions of a database server in the prior art; and
FIG. 5 is an exemplary diagram of generation of a data graph in Embodiment 2 of a database server according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

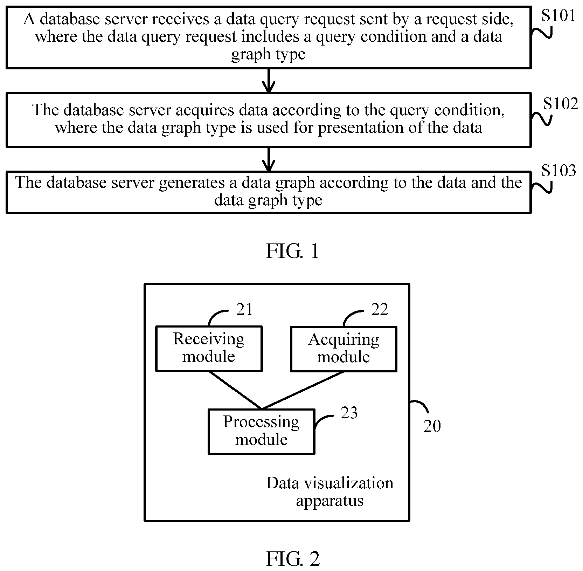

FIG. 1 is a flowchart of Embodiment 1 of a data visualization method according to the present invention. This embodiment of the present invention provides a data visualization method, and the method may be executed by a device such as a data visualization apparatus or a database server, where the data visualization apparatus may be independently set, or may be integrated in a large data storage device such as a database server. As shown in FIG. 1, the method includes:
S101: A database server receives a data query request sent by a request side, where the data query request includes a query condition and a data graph type.

Generally, a data query request includes only a query condition, for example, a location of data and/or a size of data, but does not specify a presentation form of the data; and the found data further needs to be processed by using a service language, to generate a data graph. In this embodiment of the present invention, the data graph type is directly carried in the data query request, so that a data graph is generated inside the device executing the method, and it is unnecessary to develop software for multiple times in different architectures. In addition, a development process of an application involving graphics and reports is simplified, and development efficiency of the foregoing application is improved.

Specifically, in a relational database, SQL syntax is extended in this embodiment of the present invention. A format of an extended SQL statement is: standard SQL + a part that defines how to implement information virtualization, where the standard SQL represents SQL syntax used in the prior art, and the part that defines how to implement information virtualization is used to represent an extended part provided in this embodiment of the present invention, for example:

```
           Select................(ANSI SQL)--standard SQL--
           as <pie/bar/line/area/custom>--extended syntax--
           [uses <customized template url location>]--extended syntax--
           [generateTo <external url>]--extended syntax--, 
```

where
"as" represents that the data graph is generated by using a data graph type specified by a post parameter, where "pie" represents..., "bar" represents..., "line" represents..., "area" represents..., and "custom" represents a customized template; when the parameter is set to custom, a service-customized data graph template is acquired by using a template location specified by a uses parameter; and "output" represents a location at which a data graph is to be generated. It should be noted that, such keywords herein and related keywords below (for example, "as", "uses", "generateTo") are used for illustration only, and may be replaced with any suitable keyword in actual production, which is not limited in the present invention.

If the data graph type is a customized template, the data query request may further include: information indicating a location from which the customized template can be acquired. Further, the data query request may further include information indicating a location of the data graph, and the like. For a data graph needing to be generated by using the customized template, a location of the customized template needs to be specified in the extended SQL statement, for example: Select avg(salary) from employee_table group by designation as pie uses customized_template_url. In this example, the location information of the data graph is represented by using a uniform resource locator (url), and the present invention is not limited thereto.

A data query request in the prior art and the data query request in this embodiment of the present invention are described below by using examples, to clearly distinguish the two.

For example, in the prior art, the data query request is an SQL statement using the SQL syntax: Select * from userdetails where userId="test_user_id_1", where "userdetails" represents a location of data, and "userId="test_user_id_1"" represents a condition that the data satisfies. In this embodiment of the present invention, to acquire a graph that is drawn by using data the same as that in the foregoing SQL statement, the data query request is Select * from userdetails where userld="test_user_id_1" as pie, where "as" represents that the data graph is generated by using a data graph type specified by a post parameter, and "pie" represents the data graph type for presentation.

For another example, in the prior art, to acquire data the same as that of the foregoing SQL statement, the data query request is a NoSQL statement using non-relational database (NoSQL) syntax: db.userdetails.find({"userId":" test_user_id_1"}). In this embodiment of the present invention, to acquire a graph drawn by using data the same as that in the foregoing SQL statement, the data query request is: db.userdetails.find({ "userId":" test_user_id_1"}, { "as" : "pie" }).

S102: The database server acquires data according to the query condition, where the data graph type is used for presentation of the data.

The database server parses the foregoing data query request, to obtain the query condition carried in the data query request, and obtains, according to the query condition, the data to be queried, that is, original data in the prior art or data obtained after original data is processed.

S103: The database server generates a data graph according to the data and the data graph type.

The data query request further carries the data graph type; therefore, the data obtained in S102 is applied to a template corresponding to the data graph type, to generate the data graph to be presented. A data graph is a graphical and visualized presentation form of information, data, and knowledge, and aims to transfer some complex data information to a user in a clear, intuitive, and efficient manner.

In this embodiment of the present invention, a query condition and a data graph type are carried in a data query request, and a data graph can be generated inside a database server. Therefore, it is unnecessary to develop software for multiple times in different architectures to generate a data graph, which improves resource utilization, and has a relatively low requirement on skills of an operator. In addition, a development process of an application involving graphics and reports is simplified, and development efficiency of the foregoing application is improved.

In the foregoing embodiment, S103 may include: determining whether a template corresponding to the data graph type has been loaded into the database server; and if it is determined that the template corresponding to the data graph type has been loaded into the database server, applying the data to the template, to generate the data graph; otherwise, loading the template into the database server and applying the data to the template, to generate the data graph.

The determining whether a template corresponding to the data graph type has been loaded into the database server may include: searching one or more data graph templates stored by the database server, to determine whether the template corresponding to the data graph type exists, and if the template corresponding to the data graph type exists, determining that the template corresponding to the data graph type has been loaded into the database server; or if the template corresponding to the data graph type does not exist, determining that the template corresponding to the data graph type has not been loaded into the database server.

Development of a service by applying this embodiment of the present invention is implemented by using the following steps: first, define a table (English: Table) or a view (English: View); define a visual structure for the table or the view, for example, the visual structure may be a pie chart, a bar chart, an area chart, a customized graph, or the like; define an implementation template for the table or the view, and complete creation of the table or the view. When the table or the view is created, a data graph type supported by the table or the view is specified. Each table or view matches one or more templates, to indicate how to generate a corresponding data graph. A template includes a series of graphic cache mapping tables for improving performance.

Based on the foregoing embodiment, S103 may specifically include: generating the data graph according to the data and the data graph type, and generating a uniform resource locator (English: Uniform Resource Locator, URL for short) that points to the data graph. Further, after the generating, by the database server, the URL, the method may further include: sending, by the database server, the URL as a response to the request side, so that the request side accesses the data graph by using the URL.

For the data query request of the request side, for example, a client, after obtaining the data graph, the database server receiving the data query request further needs to inform the request side of the location information of the data graph, so that the request side displays the data graph. Herein, the database server responds to the request side by using the URL, but the present invention is not limited thereto.

FIG. 2 is a schematic structural diagram of Embodiment 1 of a data visualization apparatus according to the present invention. As shown in FIG. 2, a data visualization apparatus 20 includes: a receiving module 21, an acquiring module 22, and a processing module 23.

The receiving module 21 is configured to receive a data query request sent by a request side, where the data query request includes a query condition and a data graph type; the acquiring module 22 is configured to acquire data according to the query condition obtained by the receiving module 21, where the data graph type is used for presentation of the data; and the processing module 23 is configured to generate a data graph according to the data obtained by the acquiring module 22 and the data graph type obtained by the receiving module 21.

The apparatus in this embodiment may be used to execute the technical solution of the method embodiment shown in FIG. 1, and implementation principles and technical solutions thereof are similar, and are not described herein again.

In the foregoing embodiment, the processing module 23 may include: a determining unit, configured to determine whether a template corresponding to the data graph type has been loaded into the data visualization apparatus 20; and if the determining unit determines that the template corresponding to the data graph type has been loaded into the data visualization apparatus, trigger a processing unit to apply the data to the template, to generate the data graph; otherwise, trigger the processing unit to load the template into the data visualization apparatus and apply the data to the template, to generate the data graph.

Further, the determining unit may be specifically configured to: search one or more data graph templates stored by the data visualization apparatus 20, to determine whether the template corresponding to the data graph type exists, and if the template corresponding to the data graph type exists, determine that the template corresponding to the data graph type has been loaded into the data visualization apparatus; or if the template corresponding to the data graph type does not exist, determine that the template corresponding to the data graph type has not been loaded into the data visualization apparatus.

Optionally, if the data graph type is a customized template, the foregoing data query request may further include: information indicating a location from which the customized template can be acquired, and the like.

Based on the foregoing description, the data visualization apparatus 20 may further include a response module (not shown in FIG. 2). In this embodiment, the processing module 23 may be further configured to generate a URL that points to the data graph. The response module is configured to send the URL as a response to the request side, so that the request side accesses the data graph by using the URL.

An embodiment of the present invention further provides a database server, where the database server has a built-in graph engine, to implement that during a data query process, a data graph is generated according to a data graph type that is specified in advance by a developer.

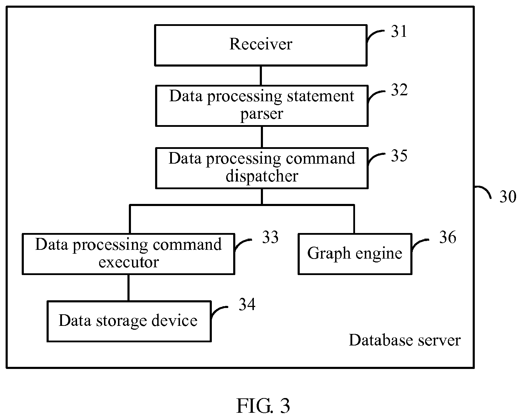

FIG. 3 is a schematic structural diagram of Embodiment 1 of a database server according to the present invention. As shown in FIG. 3, the database server 30 in this embodiment of the present invention includes a database server having standard functions, and components related to graphical processing, where the database server having standard functions includes a receiver 31, a data processing statement parser (English: Command Parser) 32, a data processing command executor (English: Command Executor) 33, and a data storage device (English: Data Storage) 34; and the components related to graphical processing include a data processing command dispatcher (English: Command Dispatcher) 35 and a graph engine (English: Graph Engine) 36. The database server having standard functions takes responsibilities such as regular data acquisition and calculation, the data processing command dispatcher 35 is responsible for dispatching a data acquisition process, and after data is acquired, the data processing command dispatcher 35 transfers the data to the graph engine 36, so that the graph engine 36 generates a final data graph according to a data graph type specified by a user.

Specifically, the receiver 31 is configured to receive a data query request, where the data query request includes a query condition and a data graph type. The data processing statement parser 32 is configured to parse the data query request to obtain a data processing command and a graph generation command, where the data processing command includes the query condition, and the graph generation command includes the data graph type. The data processing command dispatcher 35 is configured to dispatch the data processing command executor 33 to acquire, according to the data processing command, data from the data storage 34. The graph engine 36 is configured to generate a data graph according to the graph generation command and the data.

The graph engine 36 may be specifically configured to: determine whether a template corresponding to the data graph type has been loaded into the database server 30; and if it is determined that the template corresponding to the data graph type has been loaded into the database server 30, apply the data to the template, to generate the data graph; otherwise, load the template into the database server 30 and apply the data to the template, to generate the data graph.

Optionally, the determining, by the graph engine 36, whether a template corresponding to the data graph type has been loaded into the database server 30 is specifically: searching one or more data graph templates stored by the database server 30, to determine whether the template corresponding to the data graph type exists, and if the template corresponding to the data graph type exists, determining that the template corresponding to the data graph type has been loaded into the database server 30; or if the template corresponding to the data graph type does not exist, determining that the template corresponding to the data graph type has not been loaded into the database server 30.

In the foregoing embodiment, if the data graph type is a customized template, the data query request may further include: information indicating a location from which the customized template can be acquired, and the like, which is not limited in the present invention.

Further, the graph engine 36 may be further configured to: generate a URL that points to the data graph; and send the URL as a response to a request side, so that the request side accesses the data graph by using the URL.

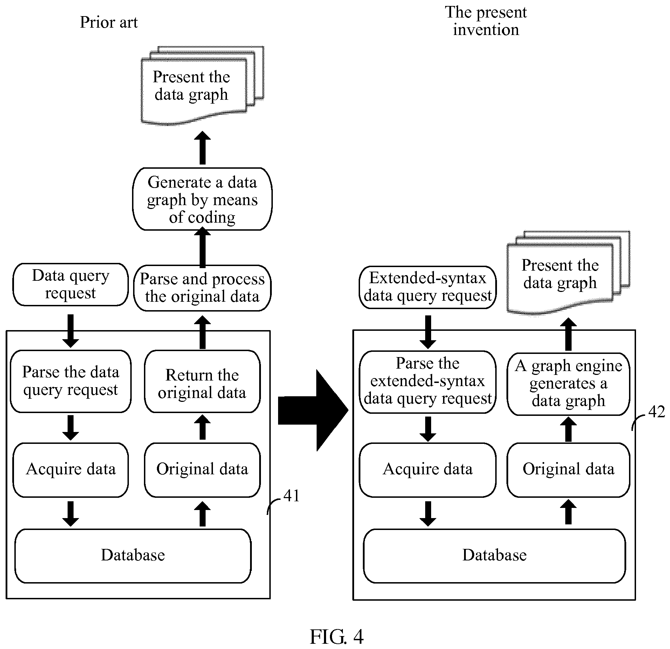

FIG. 4 is an exemplary diagram of a comparison between functions of a database server of the present invention and functions of a database server in the prior art.

As shown in FIG. 4, in the prior art, a database server 41 receives a data query request; parses the data query request; acquires original data from a database; and returns the original data to a request side sending the data query request. Then, the request side performs the following steps: parse and process the original data, generate a data graph by means of coding, and present the data graph.

Referring to FIG. 3 and FIG. 4, in this embodiment of the present invention, a database server 42 receives an extended syntax data query request, parses the extended syntax data query request, and acquires original data from a database; a graph engine 36 in the database server 42 generates a data graph according to the original data, and sends the data graph as a response to a request side of the extended syntax data query request, so that the request side presents the data graph.

It can be known from the foregoing comparison that, the database server provided in this embodiment of the present invention has a data graph generation function, and can directly send a data graph as a response to a request side of a data query request according to the received data query request, where the data query request includes a data graph type.

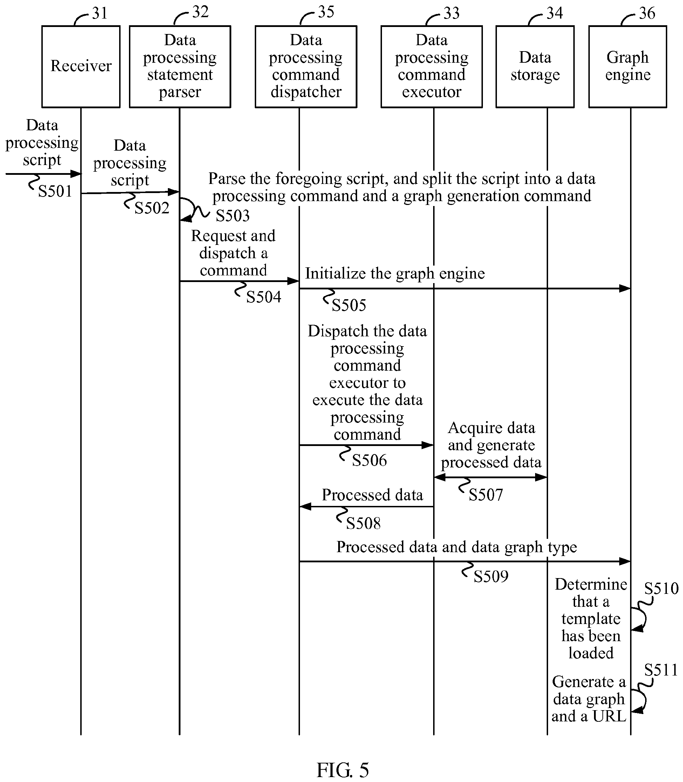

Cooperative work among the foregoing components is described below by using a signaling diagram, to describe generation of a data graph. As shown in FIG. 5, the cooperative work includes:
S501: The receiver 31 receives a data processing script entered by a data graph requester.

The foregoing data processing script is an extended data processing script, which, as construed by persons skilled in the art, may include a query statement that includes a part that defines how to implement information virtualization, for example, the foregoing extended SQL statement or the foregoing extended NoSQL statement.

S502: The data processing statement parser 32 acquires the foregoing data processing script.

S503: The data processing statement parser 32 parses the foregoing data processing script, and splits the foregoing data processing script into a data processing command and a graph generation command.

The data processing command may be construed as a command that includes the foregoing query condition, or as another command for processing data. The graph generation command may be construed as a command including information related to generation of a data graph. For example, the command includes a data graph type and information about a template corresponding to the data graph type.

S504: The data processing statement parser 32 requests the data processing command dispatcher 35 to dispatch the commands.

The data processing command dispatcher 35 sequentially executes the commands.

S505: The data processing command dispatcher 35 initializes the graph engine 36.

The data processing command dispatcher initializes the graph engine 36 as required according to a status of the graph engine 36.

S506: The data processing command dispatcher 35 dispatches the data processing command executor 33.

S507: After being dispatched by the data processing command dispatcher 35, the data processing command executor 33 executes a data processing command, acquires data from the data storage 34, and obtains processed data.

Herein, the data processing command is the data processing command obtained after the data processing statement parser 32 parses the script.

S508: The data processing command executor 33 returns the processed data to the data processing command dispatcher 35.

S509: The data processing command dispatcher 35 dispatches the graph engine 36, and transfers the processed data and a data graph type to the graph engine 36.

The data graph type is specified by the data graph requester.

S510: The graph engine 36 determines that a data graph template corresponding to the data graph type has been loaded into the database server 30.

Specifically, the graph engine 36 determines, according to the data graph type, whether the data graph template corresponding to the data graph type has been loaded into the database server 30; if the data graph template has not been loaded into the database server 30, loads the data graph template corresponding to the data graph type into the database server 30, and then performs S511; or if the data graph template has been loaded into the database server 30, directly performs S511.

S511: The graph engine 36 applies the processed data to the data graph template, to generate a data graph, and generates a URL that points to the data graph.

Then, the graph engine 36 sends the URL as a response to the data graph requester, and the data graph requester can access the generated data graph according to the URL.

In this embodiment of the present invention, a query condition and a data graph type are carried in a data query request, a data graph can be generated inside a database server, and a URL for accessing the data graph is sent to a data graph requester as a response, so that the data graph requester accesses the data graph by using the URL. Therefore, it is unnecessary to develop software for multiple times in different architectures, which improves resource utilization, and has a relatively low requirement on skills of an operator. In addition, a development process of an application involving graphics and reports is simplified, and development efficiency of the foregoing application is improved.

Persons of ordinary skill in the art may understand that all or some of the steps of the method embodiments may be implemented by a program instructing related hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A data visualization method, comprising:
receiving, by a database server, a data query request sent by a request side, wherein the data query request comprises a query condition and a data graph type;
acquiring, by the database server, data according to the query condition, wherein the data graph type is used for presentation of the data; and
generating, by the database server, a data graph according to the data and the data graph type.

2. The method according to claim 1, wherein the generating, by the database server, a data graph according to the data and the data graph type comprises:
determining whether a template corresponding to the data graph type has been loaded into the database server; and
if it is determined that the template corresponding to the data graph type has been loaded into the database server, applying the data to the template, to generate the data graph; otherwise, loading the template into the database server and applying the data to the template, to generate the data graph.

3. The method according to claim 2, wherein the determining whether a template corresponding to the data graph type has been loaded into the database server comprises:
searching one or more data graph templates stored by the database server, to determine whether the template corresponding to the data graph type exists, and if the template corresponding to the data graph type exists, determining that the template corresponding to the data graph type has been loaded into the database server; or if the template corresponding to the data graph type does not exist, determining that the template corresponding to the data graph type has not been loaded into the database server.

4. The method according to any one of claims 1 to 3, wherein if the data graph type is a customized template, the data query request further comprises: information indicating a location from which the customized template can be acquired.

5. The method according to any one of claims 1 to 4, wherein the generating, by the database server, a data graph according to the data and the data graph type specifically comprises:
generating the data graph according to the data and the data graph type, and generating a uniform resource locator URL that points to the data graph; and
after the generating, by the database server, the URL, the method further comprises:
sending, by the database server, the URL as a response to the request side, so that the request side accesses the data graph by using the URL.

6. A data visualization apparatus, comprising:
a receiving module, configured to receive a data query request sent by a request side, wherein the data query request comprises a query condition and a data graph type;
an acquiring module, configured to acquire data according to the query condition obtained by the receiving module, wherein the data graph type is used for presentation of the data; and
a processing module, configured to generate a data graph according to the data obtained by the acquiring module and the data graph type obtained by the receiving module.

7. The apparatus according to claim 6, wherein the processing module comprises:
a determining unit, configured to determine whether a template corresponding to the data graph type has been loaded into the data visualization apparatus; and
if the determining unit determines that the template corresponding to the data graph type has been loaded into the data visualization apparatus, trigger a processing unit to apply the data to the template, to generate the data graph; otherwise, trigger the processing unit to load the template into the database visualization apparatus and apply the data to the template, to generate the data graph.

8. The apparatus according to claim 7, wherein the determining unit is specifically configured to:
search one or more data graph templates stored by the data visualization apparatus, to determine whether the template corresponding to the data graph type exists, and if the template corresponding to the data graph type exists, determine that the template corresponding to the data graph type has been loaded into the data visualization apparatus; or if the template corresponding to the data graph type does not exist, determine that the template corresponding to the data graph type has not been loaded into the data visualization apparatus.

9. The apparatus according to any one of claims 6 to 8, wherein if the data graph type is a customized template, the data query request further comprises: information indicating a location from which the customized template can be acquired.

10. The apparatus according to any one of claims 6 to 9, wherein the apparatus further comprises a response module, wherein
the processing module is further configured to generate a uniform resource locator URL that points to the data graph; and
the response module is configured to send the URL as a response to the request side, so that the request side accesses the data graph by using the URL.

11. A database server, comprising: a receiver, a data processing statement parser, a data processing command dispatcher, a data processing command executor, a data storage device, and a graph engine, wherein
the receiver is configured to receive a data query request, wherein the data query request comprises a query condition and a data graph type;
the data processing statement parser is configured to parse the data query request to obtain a data processing command and a graph generation command, wherein the data processing command comprises the query condition, and the graph generation command comprises the data graph type;
the data processing command dispatcher is configured to dispatch the data processing command executor to acquire, according to the data processing command, data from the data storage; and
the graph engine is configured to generate a data graph according to the graph generation command and the data.

12. The database server according to claim 11, wherein the graph engine is specifically configured to:
determine whether a template corresponding to the data graph type has been loaded into the database server; and
if it is determined that the template corresponding to the data graph type has been loaded into the database server, apply the data to the template, to generate the data graph; otherwise, load the template into the database server and apply the data to the template, to generate the data graph.

13. The database server according to claim 12, wherein the determining, by the graph engine, whether a template corresponding to the data graph type has been loaded into the database server is specifically:
searching one or more data graph templates stored by the database server, to determine whether the template corresponding to the data graph type exists, and if the template corresponding to the data graph type exists, determining that the template corresponding to the data graph type has been loaded into the database server; or if the template corresponding to the data graph type does not exist, determining that the template corresponding to the data graph type has not been loaded into the database server.

14. The database server according to any one of claims 11 to 13, wherein the data processing command dispatcher is further configured to:
initialize the graph engine before the data fed back by the data processing command executor and the graph generation command are sent to the graph engine.

15. The database server according to any one of claims 11 to 14, wherein if the data graph type is a customized template, the data query request further comprises: information indicating a location from which the customized template can be acquired.

16. The database server according to any one of claims 11 to 15, wherein the graph engine is further configured to:
generate a uniform resource locator URL that points to the data graph; and
send the URL as a response to a request side, so that the request side accesses the data graph by using the URL.
